# EUROPÄISCHE PATENTANMELDUNG

(11) **EP 1 987 913 A1**
(43) Veröffentlichungstag der Anmeldung: **05.11.2008**
(21) Anmeldenummer: 08075245.4
(22) Anmeldetag: 28.03.2008
(51) Int. Cl.: B23Q 3/155, G01B 21/04

(54) **Indentifikation von austauschbaren Einrichtungen für Koordinatenmessgeräte**

(30) Priorität: 04.05.2007 DE 102007021362
(71) Anmelder: Carl Zeiss Industrielle Messtechnik GmbH, 73447 Oberkochen (DE)
(72) Erfinder: Beck, Rolf, 73728 Esslingen (DE)
(74) Vertreter: Patentanwälte Bressel und Partner

(57) **Zusammenfassung**

Die Erfindung betrifft ein Verfahren zur Identifikation von austauschbaren Einrichtungen (9), die an einem Koordinatenmessgerät (11) angeordnet werden können, wobei eine erste Messspannung an einen ersten (21) und einen zweiten (22) elektrischen Kontakt einer der austauschbaren Einrichtungen (9) angelegt wird, so dass an dem ersten elektrischen Kontakt (21) ein höheres elektrisches Potenzial anliegt als an dem zweiten elektrischen Kontakt (22). In Reaktion auf die erste Messspannung wird ein erstes Messsignal aufgenommen. Eine zweite Messspannung wird an den ersten (21) und den zweiten (22) elektrischen Kontakt angelegt, so dass an dem ersten elektrischen Kontakt (21) ein niedrigeres elektrisches Potenzial anliegt als an dem zweiten elektrischen Kontakt (22), und in Reaktion auf die zweite Messspannung wird ein zweites Messsignal aufgenommen. Die austauschbare Einrichtung (9) wird durch Auswertung des ersten und des zweiten Messsignals identifiziert.

## Beschreibung

Die Erfindung betrifft die Identifikation von austauschbaren Einrichtungen, die an einem Koordinatenmessgerät angeordnet werden können.

Unter einem Koordinatenmessgerät wird jegliche Einrichtung verstanden, die in der Lage ist, Koordinaten oder Abmessungen von Gegenständen zu messen. Insbesondere fallen auch so genannte Digitalisiermaschinen und auch Werkzeugmaschinen darunter, wenn diese im Messbetrieb arbeiten. Dabei können auch Werkzeuge zur Bearbeitung von Gegenständen im Messbetrieb eingesetzt werden.

Bei den austauschbaren Einrichtungen handelt es sich vorzugsweise um Taster und andere Einrichtungen, die zur Messung der Koordinaten oder Abmessungen in Kontakt mit dem Messgegenstand gebracht werden. Die Erfindung betrifft jedoch auch andere austauschbare Einrichtungen, z.B. optische Sensoren, die durch Einsatz und/oder Auswertung von elektromagnetischer Strahlung Messsignale erzeugen.

Koordinatenmessgeräte (im Folgenden kurz: KMG) können üblicherweise mit mehreren verschiedenen Sensoren betrieben werden, wobei gleichzeitig nur einer oder wenige der Sensoren an dem KMG angeordnet sind. Das KMG oder ein Messsystem benötigt in der Regel die Information, welcher Sensor bzw. welcher Sensor-Typ gegenwärtig an dem KMG angeordnet ist. Z.B. kann diese Information erforderlich sein, um von dem Sensor erzeugte Signale auszuwerten oder um eine für den Betrieb des Sensors benötigte Steuereinrichtung auszuwählen und/oder mit dem Sensor zu verbinden.

Aus der EP 0 404 275 B1 sind austauschbare Werkzeuge bekannt, die einen elektrischen Schaltkreis haben, um Signale zu erzeugen oder zu übertragen. Die Werkzeuge können jeweils über mehrere elektrische Kontakte mit einem Kopf einer Maschine verbunden werden, wobei ein Teil der Kontakte mit dem elektrischen Schaltkreis verbunden ist, um die Signale zu übertragen. Ein Widerstand ist mit einem Teil der Kontakte verbunden. Zur Bestimmung des Widerstandes ist eine Signalverarbeitungseinheit vorgesehen, die über Kontakte an dem Kopf der Maschine Signale von dem Werkzeug empfangen und verarbeiten kann. Z.B. ist eine Konstantstromquelle vorgesehen, die einen bekannten Strom durch den Widerstand des Werkzeugs leitet. An den beiden Anschlussleitungen des Widerstandes wird dann über einen Analog-/Digitalwandler die Spannung über den Widerstand abgegriffen. Dieser Eingangswert ist einzigartig und charakterisiert das Werkzeug. Ein Mikroprozessor kann dann anhand einer in einem Speicher gespeicherten Tabelle überprüfen, ob das korrekte Werkzeug von der Maschine aufgenommen worden ist.

DE 195 43 763 A1 beschreibt ein Verfahren zur automatischen Erkennung verschiedener Sensortypen bei Koordinatenmessgeräten, bei denen die Sensoren vollautomatisch gewechselt werden. Eine für jeden Sensortyp spezifische Kenngröße des Sensors wird erfasst, und mit Hilfe der Kenngröße wird eine Selektion der nachverarbeitenden Elektronik durchgeführt. Die für die verschiedenen Sensortypen spezifische Kenngröße wird von einer Schaltung in jedem Sensor geliefert. Die Schaltung der verschiedenen Sensoren weisen unterschiedliche Anzahlen von Dioden auf. Die Schaltung wird jeweils über zwei Kontakte mit der Messelektronik des Koordinatenmessgeräts in Verbindung gebracht. Durch Aufschalten einer Referenzspannung mit Arbeitswiderstand an einen Kontakt und Anlegen eines Bezugspotentials an dem anderen Kontakt ist für jeden Sensor eine andere Dioden-Durchlassspannung messbar. Eine Komparatorschaltung erfasst die Dioden-Durchlassspannung. In der DE 195 43 763 A1 wird auch erwähnt, dass anstelle der Dioden Widerstände, Kondensatoren oder andere elektrische Bauelemente verwendet werden können und anstelle der Dioden-Durchlassspannungen Ströme, Kapazitäten, Induktivitäten, Frequenzen oder dergleichen gemessen werden können.

In der Praxis existiert eine Vielzahl von Sensoren und Sensor-Typen, die an einem KMG betrieben werden kann. Da Fertigungstoleranzen in Kauf zu nehmen sind und da der Aufwand für die Bestimmung eines charakteristischen Widerstandes oder einer charakteristischen Dioden-Durchlassspannung gering gehalten werden soll, ist die Anzahl von Sensoren oder Sensor-Typen, die voneinander unterscheidbar sind, begrenzt.

Aus DE 196 31 425 A1 ist ein Verfahren zur Identifikation von an Mess- oder Werkzeugmaschinen austauschbar angeordneten Zubehörteilen bekannt. In einem zwischengeschalteten Auswertegerät erfolgt eine identifikationsabhängige automatische Umschaltung der Zuleitung zu diesem Zubehörteil auf ein der Mess- oder Werkzeugmaschine zugeordnetes, Zubehörteil-spezifisches Steuergerät. Die Gegenwart des jeweiligen Zubehörteils wird von einem dem betreffenden Zubehörteil zugeordnetem Identifikator ausgehendem und dem Auswertegerät zugeführtem, frequenzdefiniertem Signal erkannt. Dadurch kann die Anzahl der unterscheidbaren Sensoren deutlich gesteigert werden. Der technische Aufwand für die Identifikation ist jedoch höher.

Aus der DE 100 57 284 A1 ist ein Verfahren zur Identifikation von Tastern an KMG bekannt. Mindestens ein Teil aller Taster, die nach einer ersten Identifikation nicht unterscheidbar sind, werden durch mindestens eine weitere Identifikation nach einem bekannten Verfahren weiter unterschieden. Bei der ersten Identifikation handelt es sich z.B. um die Bestimmung eines charakteristischen Widerstandes. Die weitere Identifikation beruht auf digitalen Identifikatoren, z.B. der Verwendung von IP-Adressen als Tastererkennungsmerkmal. Auch bei diesem Verfahren können viele Sensoren voneinander unterschieden werden. Der technische Aufwand für die Identifikation ist aber ebenfalls deutlich höher.

Es ist eine Aufgabe der vorliegenden Erfindung, eine Identifikation einer Vielzahl von austauschbaren Einrichtungen zu ermöglichen, wobei jedoch der technische Aufwand für die Identifikation gering sein soll. Insbesondere soll es auch möglich sein, vorhandene austauschbare Einrichtungen, die einen charakteristischen Widerstand oder eine Diode oder Diodenschaltung mit charakteristischer Durchlassspannung aufweisen, auch weiterhin identifizieren zu können, wobei dieselbe Identifikationseinrichtung zum Einsatz kommen soll.

Gemäß einem Gedanken der vorliegenden Erfindung wird vorgeschlagen, elektrische Eigenschaften einer elektrischen Schaltung der austauschbaren Einrichtung durch Aufnehmen von zumindest zwei Messsignalen zu bestimmen. Dabei wird ein erstes Messsignal in Reaktion auf eine erste Messspannung aufgenommen und ein zweites Messsignal in Reaktion auf eine zweite Messspannung aufgenommen, wobei die Polarität der an der elektrischen Schaltung angelegten ersten und zweiten Messspannung umgekehrt ist, d.h. es wird zwischen dem Anlegen der ersten Messspannung und der zweiten Messspannung umgepolt.

Es ist daher möglich, beliebige elektrische Schaltungen in der austauschbaren Einrichtung vorzusehen, die vor und nach der Umpolung gleiche oder verschiedene charakteristische elektrische Eigenschaften aufweisen. Dadurch, dass auch verschiedene elektrische Eigenschaften vor und nach Umpolung gemessen werden können, wird die Anzahl der voneinander unterscheidbaren Einrichtungen wesentlich erhöht. Es ist aber auch möglich, elektrische Eigenschaften von Einrichtungen zu bestimmen, die sich vor und nach Umpolung der Messspannung gleich verhalten. Somit können auch bereits existierende Einrichtungen immer noch identifiziert werden. Die Unterscheidung von Einrichtungen, deren elektrische Schaltung vor und nach Umpolung die gleichen Eigenschaften aufweist, von Einrichtungen, deren elektrische Schaltung vor und nach Umpolung verschiedene elektrische Eigenschaften aufweist, vergrößert die Anzahl der voneinander unterscheidbaren Einrichtungen weiter.

Bei den elektrischen Eigenschaften handelt es sich z.B. um einen elektrischen (Gleichstrom-) Widerstand und/oder um eine Durchlassspannung eines elektrischen Einwegventils. Unter einem elektrischen Einwegventil wird ein Bauteil oder eine Schaltung verstanden, die (innerhalb eines gültigen Betriebsbereichs) elektrischen Strom nur oder bevorzugt in einer Richtung hindurchfließen lässt und nicht oder nur einen geringen Strom in der entgegengesetzten Richtung hindurchfließen lässt.

Insbesondere wird ein Verfahren zur Identifikation von austauschbaren Einrichtungen, die an einem Koordinatenmessgerät angeordnet werden können, vorgeschlagen, wobei
- eine erste Messspannung an einen ersten und einen zweiten elektrischen Kontakt einer der austauschbaren Einrichtungen angelegt wird, so dass an dem ersten elektrischen Kontakt ein höheres elektrisches Potenzial anliegt als an dem zweiten elektrischen Kontakt, und in Reaktion auf die erste Messspannung ein erstes Messsignal aufgenommen wird,
- eine zweite Messspannung an den ersten und den zweiten elektrischen Kontakt angelegt wird, so dass an dem ersten elektrischen Kontakt ein niedrigeres elektrisches Potenzial anliegt als an dem zweiten elektrischen Kontakt, und in Reaktion auf die zweite Messspannung ein zweites Messsignal aufgenommen wird,
- die austauschbare Einrichtung durch Auswertung des ersten und des zweiten Messsignals identifiziert wird.

Es reicht daher aus, wenn die elektrische Schaltung der austauschbaren Einrichtung für die Zwecke der Identifikation dieser Einrichtung lediglich zwei elektrische Kontakte aufweist. Die Erfindung ist jedoch nicht hierauf beschränkt. Es können auch mehr als zwei elektrische Kontakte der austauschbaren Einrichtung für die Identifikation verwendet werden.

Im Fall der lediglich zwei elektrischen Kontakte entspricht das erste Messsignal und entspricht das zweite Messsignal jeweils einer elektrischen Eigenschaft von elektrischen Bauteilen der austauschbaren Einrichtung, wobei die Bauteile mit dem ersten und dem zweiten elektrischen Kontakt verbunden sind. Bei den elektrischen Bauteilen handelt es sich vorzugsweise um sowohl zumindest einen elektrischen Widerstand als auch um ein elektrisches Einwegventil (z.B. eine Diode oder einen Transistor oder Thyristor). Dabei kann der elektrische Widerstand bei bestimmten Exemplaren oder Typen der austauschbaren Einrichtung auch Null betragen, damit dieser Wert als charakteristische Eigenschaft zugeordnet werden kann. Auch kann bei bestimmten Exemplaren oder Typen der Einrichtung das Einwegventil fehlen, wobei das Fehlen eine charakteristische Eigenschaft ist, die bei der Identifikation der Einrichtung genutzt wird.

Die Verwendung von einfachen und kostengünstigen elektrischen Bauteilen wie Widerständen und Dioden führt zu einer hohen Zuverlässigkeit und geringen Kosten der elektrischen Schaltung. Auch kann die Identifikationseinrichtung entsprechend einfach ausgestaltet sein. Z.B. kann dasselbe Messprinzip zur Bestimmung des Widerstandes oder der Durchlassspannung eingesetzt werden, wie es aus der DE 195 43 763 A1 bzw. aus der EP 0 404 275 B1 bekannt ist, d.h. z.B. eine Konstantstromquelle verwendet werden und die am Widerstand oder der Diode abfallende Spannung durch einen Analog-/Digitalwandler abgegriffen werden. Auf die Identifikationseinrichtung wird noch näher eingegangen.

Vorzugsweise wird die Identifikation der austauschbaren Einrichtung vorgenommen, während die austauschbare Einrichtung an dem Koordinatenmessgerät angeordnet ist. Z.B. kann, wie ebenfalls aus dem bereits erwähnten Stand der Technik bekannt ist, nach dem Ankoppeln eines Sensors an ein KMG überprüft werden, ob es sich um die richtige Einrichtung handelt. Lediglich die Identifikation der Einrichtung erfolgt jedoch anders, nämlich in der erfindungsgemäßen Weise. Die Überprüfung, die auf die Identifikation folgt, kann in derselben Weise durchgeführt werden.

Die Erfindung ist aber nicht darauf beschränkt, dass die Identifikation lediglich zur Überprüfung des richtigen Sensors genutzt wird. Vielmehr kann die Identifikation für jegliche andere Art des Betriebes eines KMG genutzt werden oder lediglich eine Identifikation vorgenommen werden, um eine entsprechende Information zu erzeugen und z.B. an einen Benutzer auszugeben.

Außer dem Verfahren zur Identifikation gehört zum Umfang der Erfindung auch eine Identifikationseinrichtung zur Identifikation von austauschbaren Einrichtungen, die an einem Koordinatenmessgerät angeordnet werden können, wobei die Identifikationseinrichtung Folgendes aufweist:
- einen Generator zur Erzeugung einer ersten Messspannung und einer zweiten Messspannung,
- einen ersten und einen zweiten elektrischen Anschluss, die mit dem Generator verbunden sind und ausgestaltet sind, die erste oder die zweite Messspannung bei Kontakt des ersten elektrischen Anschlusses mit einem ersten elektrischen Kontakt einer der austauschbaren Einrichtungen und bei Kontakt des zweiten elektrischen Anschlusses mit einem zweiten elektrischen Kontakt der austauschbaren Einrichtung an die elektrischen Kontakte anzulegen, so dass beim Anlegen der ersten Messspannung an dem ersten elektrischen Kontakt ein höheres elektrisches Potenzial anliegt als an dem zweiten elektrischen Kontakt, und beim Anlegen der zweiten Messspannung an dem ersten elektrischen Kontakt ein niedrigeres elektrisches Potenzial anliegt als an dem zweiten elektrischen Kontakt,
- eine Messeinrichtung, die ausgestaltet ist, in Reaktion auf die erste und zweite Messspannung jeweils ein Messsignal aufzunehmen,
- eine Auswertungseinrichtung, die ausgestaltet ist, die austauschbare Einrichtung durch Auswertung des ersten und des zweiten Messsignals zu identifizieren.

Die Identifikationseinrichtung arbeitet z.B. nach dem oben bereits beschriebenen Prinzip, dass eine Konstantstromquelle einen Messstrom erzeugt. In diesem Fall hängt daher der Betrag der ersten und der zweiten Messspannung von den elektrischen Eigenschaften der elektrischen Schaltung der austauschbaren Einrichtung ab. Es kann jedoch auch mit einer konstanten Spannungsquelle gearbeitet werden. Ein Ausführungsbeispiel für eine Identifikationseinrichtung wird noch beschrieben.

Zum Umfang der Erfindung gehört ferner ein Koordinatenmessgerät, das die Identifikationseinrichtung nach dem vorhergehenden Anspruch aufweist.

Gemäß einem weiteren Gedanken der vorliegenden Erfindung weist eine Einrichtung zur austauschbaren Anordnung an einem Koordinatenmessgerät eine elektrische Schaltung auf, die der Identifikation der Einrichtung oder des Einrichtungstyps dient. Die elektrische Schaltung weist zumindest zwei parallele Zweige auf, durch die Strom fließen kann. Jeder Zweig kann daher auch als Strompfad bezeichnet werden. In zumindest einem Zweig ist ein elektrisches Einwegventil angeordnet, so dass der Strom durch den Zweig (innerhalb eines Betriebsbereichs, der insbesondere durch die an dem Zweig oder dem Einwegventil anliegende elektrische Spannung gekennzeichnet ist) nur in einer Stromflussrichtung von Strom durchflossen werden kann oder zumindest in der Gegenrichtung nur von einem sehr geringen Strom durchflossen werden kann (z.B. von einem in Sperrrichtung durch eine Diode fließenden Sperrstrom).

Durch eine solche elektrische Schaltung mit zumindest einem Zweig, der ein elektrisches Einwegventil enthält, ist eine einfach herzustellende elektrische Schaltung gegeben, die nach Umpolung der an den Zweigen anliegenden elektrischen Spannung andere elektrische Eigenschaften zeigt als vor der Umpolung.

Insbesondere wird eine Einrichtung, insbesondere Messsensor, zur austauschbaren Anordnung an einem Koordinatenmessgerät vorgeschlagen, wobei die Einrichtung Folgendes aufweist:
- einen ersten und einen zweiten elektrischen Kontakt, über die die Einrichtung von außen elektrisch kontaktierbar ist,
- eine elektrische Schaltung mit einem ersten Zweig und einem parallel zu dem ersten Zweig geschalteten zweiten Zweig, wobei der erste Zweig und der zweite Zweig jeweils an einem ersten Ende mit dem ersten elektrischen Kontakt und an einem zweiten, dem ersten Ende entgegengesetzten Ende mit dem zweiten elektrischen Kontakt verbunden sind, wobei der erste Zweig einen für die Einrichtung charakteristischen elektrischen Widerstand und der zweite Zweig ein elektrisches Einwegventil, insbesondere eine Diode oder einen Transistor, und einen zweiten für die Einrichtung charakteristischen elektrischen Widerstand aufweist.

Dabei ist es möglich, dass der erste und/oder der zweite charakteristische elektrische Widerstand Null ist.

Vorteile dieser Einrichtung sind, dass
- zwei parallele Schaltungszweige mit zumindest einer Diode und elektrischen Widerständen in einfacher und kostengünstiger Weise hergestellt werden können,
- die Identifikation kompatibel mit der Identifikation von bereits bekannten Einrichtungen ist, die lediglich einen Zweig mit einem elektrischen Widerstand oder einer Diode aufweisen, da solche Einrichtungen mit derselben Verfahrensweise wie die erfindungsgemäße Einrichtung identifiziert werden können.

Um die Anzahl der voneinander unterscheidbaren Einrichtungen zu erhöhen, kann die Diode in dem zweiten Zweig oder eine Reihenschaltung von Dioden in dem zweiten Zweig eine für die Einrichtung charakteristische Durchlassspannung aufweisen. Die Durchlassspannung (oder Schwellspannung) einer Diode gibt die kleinste Spannung an, bei der in Durchlassrichtung ein signifikanter Stromfluss stattfindet. Die Durchlassspannung kann z.B. als diejenige Spannung definiert sein, die an der Diode bei einem vorgegebenen Strom abfällt, wobei der vorgegebene Strom z.B. 1 mA ist.

Bei einer Ausführungsform der Erfindung weist auch ein anderer Zweig als der zweite Zweig ein elektrisches Einwegventil auf, dessen Durchlassrichtung jedoch der Durchlassrichtung für einen Stromfluss durch das erste elektrische Einwegventil in dem zweiten Zweig entgegengesetzt ist. Z.B. ist in dem ersten Zweig in Reihe zu dem ersten charakteristischen Widerstand eine weitere Diode vorgesehen, so dass vor einer Umpolung der Messspannung lediglich ein Stromfluss durch den ersten Zweig stattfindet und nach der Umpolung der Messspannung lediglich ein Stromfluss durch den zweiten Zweig stattfindet.

Jedes der Einwegventile kann auch durch eine Reihenschaltung von mehreren elektrischen Bauelementen, z.B. von mehreren Dioden, realisiert werden.

Wenn in dieser Beschreibung von den elektrischen Eigenschaften die Rede ist, die vor und nach der Umpolung der Messspannung gemessen werden können, so kann es sich bei den elektrischen Eigenschaften grundsätzlich z.B. um Gleichstromwiderstände (in dieser Beschreibung kurz als Widerstand bezeichnet), Wechselstromwiderstände (z.B. Induktivitäten oder Kapazitäten) und/oder elektrische Eigenschaften von anderen Bauteilen handeln, die spezifisch für das Bauteil definiert sind (z.B. die Durchlassspannung einer Diode). Auch Kombinationen dieser einzelnen elektrischen Eigenschaften können als elektrische Eigenschaft bestimmt werden, z.B. die Resonanzfrequenz eines aus zwei Bauteilen gebildeten Schwingkreises, z.B. eines LC-Schwingkreises.

Ferner können unterschiedliche Verfahren eingesetzt werden, um die elektrischen Eigenschaften des Schaltkreises der austauschbaren Einrichtung zu messen. Dabei kann insbesondere auch der zeitliche Verlauf einer primären Messgröße, z.B. des fließenden elektrischen Stroms oder der Spannung, bestimmt werden.

Vorzugsweise jedoch werden einfache elektrische Eigenschaften wie der Gleichstromwiderstand oder die Durchlassspannung einer Diode bestimmt und wird nicht zeitaufgelöst gemessen.

Ausführungsbeispiele der Erfindung werden nun unter Bezugnahme auf die beigefügte Zeichnung beschrieben. Die einzelnen Figuren der Zeichnung zeigen:
- Fig. 1: schematisch ein Koordinatenmessgerät in Portalbauweise mit einem daran angeordneten Tast-Sensor und mit einer Identifikationseinrichtung,
- Fig. 2: ein elektrisches Schaltdiagramm, das einen im Sensor befindlichen Schaltkreis und Schaltungsdetails in der Identifikationseinrichtung zeigt,
- Fig. 3: die Schaltungsanordnung gemäß Fig. 2, wobei jedoch der Schaltkreis des Sensors anders ausgestaltet ist, und
- Fig. 4: ein Flussdiagramm zur Darstellung von Verfahrensschritten bei der Identifikation eines Sensors.

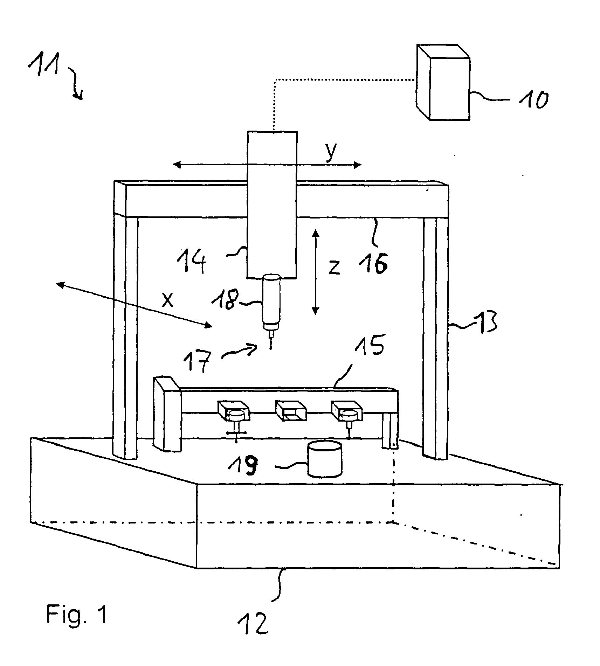

Fig. 1 zeigt ein Koordinatenmessgerät 11 in Portalbauweise. Auf einem Messtisch 12 des Koordinatenmessgeräts 11 ist das in X-Richtung eines kartesischen Koordinatensystems des Koordinatenmessgeräts 11 bewegliche Portal 13 angeordnet. Eine Pinole 14 kann in Y-Richtung des Koordinatensystems entlang einem Querträger 16 des Portals bewegt werden. Ferner kann die Pinole 14 einen Messkopf 18 mit daran montiertem Tast-Sensor 17 in Z-Richtung des Koordinatensystems bewegen. Bei dem Tast-Sensor 17 handelt es sich in dem Ausführungsbeispiel um einen Taststift zum mechanischen Antasten von Gegenständen.

Wie in Fig. 1 schematisch dargestellt ist, weist das Koordinatenmessgerät 11 eine Steuerungs- und Auswertungseinrichtung 10 auf, die beispielsweise Teil eines handelsüblichen Computers ist, der mit Software für den Betrieb des Koordinatenmessgeräts 11 ausgestattet ist. Die Einrichtung 10 ist, wie durch eine gepunktete Linie dargestellt ist, mit den beweglichen Teilen 13, 14, 15 des Koordinatenmessgeräts 11 und den daran vorgesehenen Messgebern verbunden, die es erlauben, die momentane Position des Mess-Sensors (insbesondere der Tastkugel am freien Ende des Taststiftes) im Koordinatensystem des Koordinatenmessgeräts 11 zu bestimmen.

Ferner zeigt Fig. 1 ein auf der Oberfläche des Messtischs 12 angeordnetes Messobjekt 19, welches durch das Koordinatenmessgerät 11 vermessen werden soll, und ein Magazin 15 mit Plätzen für drei verschiedene Tast-Sensoren, die wahlweise und automatisch von dem Koordinatenmessgerät 11 aufgenommen werden können. Insbesondere wird immer dann, wenn ein Sensor von dem Messkopf 18 eingewechselt wurde, um mit dem eingewechselten Sensor ein Messobjekt zu vermessen, eine Identifikation des eingewechselten Sensors durchgeführt. Die Steuerungs- und Auswertungseinrichtung 10 weist eine Identifikationseinrichtung auf, die ausgestaltet ist, die Messspannungen zur Identifikation des Sensors an elektrische Kontakte des Sensors anzulegen und die resultierenden Messsignale aufzunehmen und auszuwerten.

Im Folgenden werden Ausführungsbeispiele für die elektrische Ausführung der Erfindung und für ein Verfahren zur Identifikation einer auswechselbaren Einrichtung, insbesondere eines Sensors für ein KMG, beschrieben. Die mechanische Ausführung des Sensors und der mit ihr in mechanischem Kontakt stehenden Teile des KMG ist beispielsweise so wie in Fig. 1 und der zugehörigen Beschreibung der EP 0 404 275 B1 beschrieben. Die mechanische Ausführung kann jedoch auch wie bei jedem anderen auswechselbaren Sensor sein, der aus dem Stand der Technik bekannt ist. Die einzige erforderliche Modifikation besteht in der anderen Ausgestaltung des elektrischen Schaltkreises in dem Sensor (d.h. in der auswechselbaren Einrichtung), um die erfindungsgemäße Identifikation zu ermöglichen.

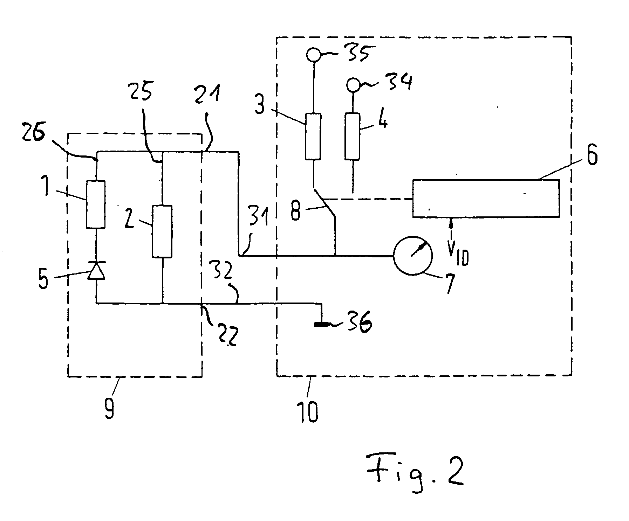

Fig. 2 zeigt einen auswechselbaren Sensor 9 und eine Identifikationseinrichtung 10, bei der es sich z.B. um die Einrichtung 10 gemäß Fig. 1 handelt. Bei dem Sensor 9 kann es sich insbesondere um einen Sensor handeln, der von dem Magazin 15 gemäß Fig. 1 gehalten wird, um von dem Messkopf 18 aufgenommen zu werden. Fig. 2 zeigt jedoch bereits den elektrischen Zustand, der entsteht, wenn der Sensor am Messkopf angeschlossen ist.

Der Schaltkreis im Sensor 9 weist einen ersten 21 und einen zweiten 22 elektrischen Kontakt auf, über die er von außen kontaktiert werden kann. Im dargestellten Zustand ist die Auswertungsschaltung der Identifikationseinrichtung 10 über einen ersten Anschluss 31 und über einen zweiten Anschluss 32 an den ersten und zweiten elektrischen Kontakt 21, 22 angeschlossen. Dabei liegt der zweite Anschluss 32 z.B. auf Massepotenzial (Bezugszeichen 36). Der elektrische Schaltkreis des Sensors 9 weist ferner einen ersten 25 und einen zweiten 26 Zweig auf, deren entgegengesetzte Enden, an denen die Zweige 25, 26 miteinander verbunden sind, jeweils mit dem ersten Anschluss 21 bzw. dem zweiten Anschluss 22 elektrisch verbunden sind. Im Ergebnis kann daher ein Summenstrom durch den ersten Kontakt 21 in den Schaltkreis fließen und teilt sich abhängig von der Polarität der angelegten Spannung auf die beiden Zweige 25, 26 auf, um wieder als Summenstrom durch den zweiten elektrischen Kontakt 22 zu fließen. Je nach Polarität der angelegten Messspannung handelt es sich bei dem genannten Summenstrom um einen positiven oder negativen Strom. Der erste Zweig 25 weist einen ersten elektrischen Widerstand 2 auf, der durch ein oder mehrere elektrische Bauteile gebildet sein kann. Der zweite Zweig 26 weist eine Reihenschaltung mit einer Diode 5 und einem zweiten elektrischen Widerstand 1 auf, der wiederum aus einem oder mehreren elektrischen Bauteilen gebildet sein kann. Die Diode 5 ist so geschaltet, dass sie einen Strom nahezu ungehindert durchlässt, wenn das elektrische Potenzial an dem zweiten Anschluss 22 größer ist als das elektrische Potenzial an dem ersten Anschluss 21. Im umgekehrten Fall fließt durch die Diode und damit durch den zweiten Zweig 26 lediglich ein sehr geringer Strom. Die Diode 5 ist somit ein elektrisches Einwegventil.

In der Identifikationseinrichtung 10 ist an den ersten Anschluss 31 ein Voltmeter 7 angeschlossen, das die Spannung misst, welche über den elektrischen Schaltkreis in dem Sensor 9 abfällt. Diese Spannung V_{ID} ist gleich der Spannung zwischen dem ersten Anschluss 31 und dem zweiten Anschluss 32. Die gemessene Spannung V_{ID} wird einer Steuerung 6 zugeführt, welche außerdem eine Auswertung der gemessenen Messsignale, d.h. der Spannungen V_{ID}, vornimmt.

Mit dem ersten Anschluss 31 ist ferner ein Schalter 8 verbunden, über den wahlweise und gesteuert durch die Steuerung 6 ein erstes elektrisches Potenzial an den ersten Anschluss 31 oder ein zweites elektrisches Potenzial an den ersten Anschluss 31 angelegt werden kann. Das eine dieser elektrischen Potenziale liegt über Massepotenzial, das andere unter Massepotenzial, so dass das Potenzial an dem ersten Kontakt 21 im ersten Fall größer ist als das Potenzial am zweiten Kontakt 22 und im anderen Fall niedriger ist als das Potenzial am zweiten Kontakt 22. Diese Potenziale werden erzeugt, indem an dem Punkt 35 der Schaltung eine gegenüber Masse positive Spannung anliegt, wobei der Punkt 35 über einen elektrischen Widerstand 3 mit dem Schalter 8 verbunden ist. Ferner liegt an einem Punkt 34 der Schaltung eine gegenüber Massepotenzial negative Spannung an, wobei der Punkt 34 über einen Widerstand 4 mit dem Schalter 8 verbunden ist. Zur Umpolung der an den Kontakten 21, 22 anliegenden Spannung steuert die Steuerung 6 den Schalter 8 so an, dass dieser umgeschaltet wird.

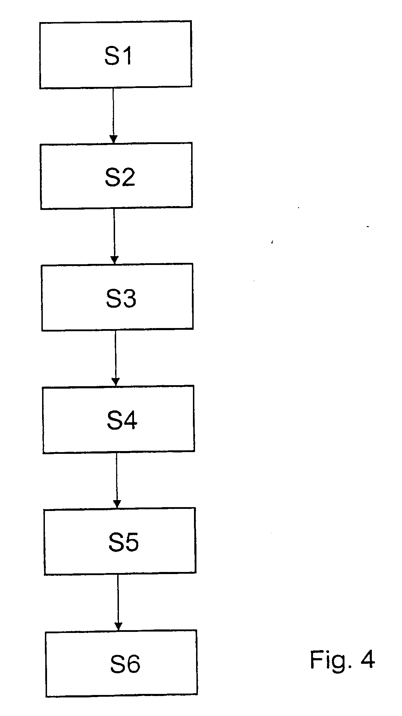

Z.B. startet ein Verfahren zur Identifikation des Sensors 9 mit Schritt S1 (siehe Fig. 4). In diesem Schritt befindet sich der Schalter 8 in der in Fig. 2 dargestellten Schaltstellung, in der das Potenzial an dem ersten Kontakt 21 größer ist als das Potenzial an dem zweiten Kontakt 22. Folglich fließt ein positiver Strom von dem Punkt 35 über den Widerstand 3, den Schalter 8 und den ersten elektrischen Kontakt 21 in den elektrischen Schaltkreis des Sensors 9. Da sich die Diode 5 in dem zweiten Zweig 26 bei dieser Betriebsart in Sperrzustand befindet, fließt der Strom im Wesentlichen vollständig durch den ersten Zweig 25 und es fällt über den Widerstand 2 eine entsprechende Spannung ab, die im Wesentlichen vollständig durch den Summenstrom bestimmt ist. Wenn die Spannung zwischen dem Punkt 35 und Massepotenzial bekannt ist oder wenn immer mit derselben Spannung gemessen wird, identifiziert der gemessene Wert der Spannung V_{ID} folglich den Widerstand 2. Die Messung des Spannungswertes V_{ID} für positive Messspannung (wie zuvor beschrieben) erfolgt im Schritt S2, der auf Schritt S1 folgt.

In dem auf Schritt S2 folgenden Schritt S3 wird der gemessene Wert der Spannung V_{ID} gespeichert, z.B. nachdem er durch einen Analog-/Digitalwandler digitalisiert wurde. Als Speicher (nicht dargestellt) dient z.B. ein Permanentdatenspeicher oder Arbeitsspeicher der Einrichtung 10.

Auf den Schritt S3 folgt in Schritt S4 eine Umschaltung des Schalters 8, so dass der Punkt 34 über den Widerstand 4 mit dem ersten Kontakt 21 verbunden wird. Im Ergebnis wird ein zweiter Betriebszustand nach Umpolung erzielt, indem das elektrische Potenzial an dem ersten Kontakt 21 niedriger ist als das elektrische Potenzial an dem zweiten Kontakt 22. Folglich fließt ein positiver Strom von Massepotenzial durch den ersten elektrischen Kontakt 22 in den Schaltkreis des Sensors 9 und teilt sich entsprechend den beteiligten Widerständen in dem ersten Zweig 25 und in dem zweiten Zweig 26 auf die Zweige 25, 26 auf, da die Diode 5 in Durchlassrichtung geschaltet ist.

In dem auf Schritt S4 folgenden Schritt S5 wird von dem Voltmeter 7 der nunmehr gültige Wert der Spannung V_{ID} bestimmt und der Steuerung 6 zugeführt. Dieser Wert der Spannung V_{ID} entspricht dem Spannungsabfall über die Parallelschaltung der beiden Widerstände 1, 2, wobei zu dem Widerstand 1 auch (zu einem geringen Teil) die elektrischen Eigenschaften der Diode 5 beitragen, so dass der scheinbar vorhandene Ersatzwiderstand auch geringfügig von der Höhe der angelegten Spannung abhängt.

Ist die Spannung zwischen dem Punkt 34 und Massepotenzial bekannt oder bei der Identifizierung von verschiedenen Sensoren immer gleich, ist der nach Umpolung gemessene Wert der Spannung V_{ID} charakteristisch für die Parallelschaltung der Zweige 25, 26 im Durchlassbetrieb der Diode 5. Die elektrischen Eigenschaften, d.h. der elektrische Widerstand 1, des zweiten Zweiges 26 bestimmen also die insgesamt über den Schaltkreis des Sensors 9 abgefallene Spannung wesentlich mit. Daher wird vor und nach der Umpolung jeweils eine Information über den Schaltkreis in dem Sensor 9 gewonnen, die vor Umpolung im Wesentlichen lediglich die elektrischen Eigenschaften des ersten Zweiges 25 betrifft und nach Umpolung die elektrischen Eigenschaften beider Zweige 25, 26 betrifft.

In dem auf Schritt S5 folgenden Schritt S6 werden die vor und nach der Umpolung gewonnenen Werte der Spannung V_{ID} dazu verwendet, den Sensor 9 zu identifizieren. Da die Widerstände 1, 2 des Sensors 9 charakteristisch für den Sensor 9 sind und in dieser Kombination einzigartig für den Sensor 9 (oder seinen Typ) sind, kann der Sensor 9 bzw. sein Typ eindeutig identifiziert werden. Einzigartig bedeutet, dass alle anderen Sensoren, die von der Identifikationseinrichtung 10 identifiziert werden können, eine andere Kombination von Werten der Spannung V_{ID} liefern, weil eine andere Kombination von elektrischen Eigenschaften des jeweiligen Sensors gegeben ist.

Z.B. wird der Sensor 9 dadurch identifiziert, dass die gemessenen Werte für die Spannung V_{ID} mit in einer Tabelle bzw. einem Datenspeicher abgelegten Werten verglichen werden und der ebenfalls in der Tabelle bzw. dem Datenspeicher abgelegte Datenwert, der den abgelegten Spannungswerten zugeordnet ist, als Hinweis auf den Sensor 9 identifiziert wird.

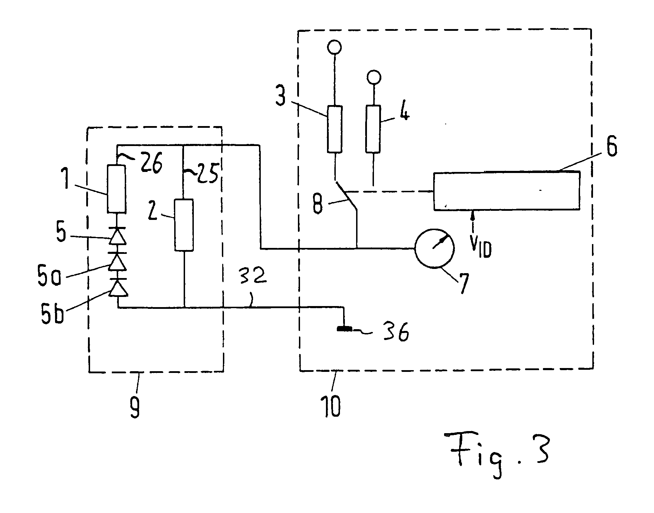

Fig. 3 zeigt einen modifizierten Schaltkreis des Sensors 9. In dem zweiten Zweig 26 ist in Reihe zu dem Widerstand 1 nicht nur eine Diode 5 geschaltet, sondern eine Reihenschaltung von mehreren Dioden, hier von insgesamt drei Dioden 5, 5a, 5b. Daher hat der zweite Zweig 26 bei gleichem Widerstand 1 andere elektrische Eigenschaften als im Fall der Fig. 2. Insbesondere, wenn der Widerstand 1 Null ist, geht die Durchlassspannung der Reihenschaltung der Dioden 5, 5a, 5b in die elektrischen Eigenschaften der elektrischen Schaltung des Sensors 9 ein und bestimmt somit den gemessenen Wert der Spannung V_{ID}. Aber auch, wenn der elektrische Widerstand 1 nicht Null ist, führt eine Veränderung der Art und/oder der Anzahl der Dioden in dem zweiten Zweig 26 zu einer Änderung der elektrischen Eigenschaften.

## Patentansprüche

1. Verfahren zur Identifikation von austauschbaren Einrichtungen (9; 17), die an einem Koordinatenmessgerät (11) angeordnet werden können, wobei
• eine erste Messspannung an einen ersten (21) und einen zweiten (22) elektrischen Kontakt einer der austauschbaren Einrichtungen (9; 17) angelegt wird, so dass an dem ersten elektrischen Kontakt (21) ein höheres elektrisches Potenzial anliegt als an dem zweiten elektrischen Kontakt (22), und in Reaktion auf die erste Messspannung ein erstes Messsignal aufgenommen wird,
• eine zweite Messspannung an den ersten (21) und den zweiten (22) elektrischen Kontakt angelegt wird, so dass an dem ersten elektrischen Kontakt (21) ein niedrigeres elektrisches Potenzial anliegt als an dem zweiten elektrischen Kontakt (22), und in Reaktion auf die zweite Messspannung ein zweites Messsignal aufgenommen wird,
• die austauschbare Einrichtung (9; 17) durch Auswertung des ersten und des zweiten Messsignals identifiziert wird.

2. Verfahren nach dem vorhergehenden Anspruch, wobei das erste Messsignal und das zweite Messsignal jeweils einer elektrischen Eigenschaft von elektrischen Bauteilen (1, 2, 5) der austauschbaren Einrichtung (9) entspricht, wobei die Bauteile (1, 2, 5) mit dem ersten (21) und dem zweiten (22) elektrischen Kontakt verbunden sind.

3. Verfahren nach einem der vorhergehenden Ansprüche, wobei die Identifikation der austauschbaren Einrichtung (9; 17) vorgenommenen wird, während die austauschbare Einrichtung (9; 17) an dem Koordinatenmessgerät (11) angeordnet ist.

4. Identifikationseinrichtung (10) zur Identifikation von austauschbaren Einrichtungen (9; 17), die an einem Koordinatenmessgerät (11) angeordnet werden können, wobei die Identifikationseinrichtung (10) Folgendes aufweist:
• einen Generator (34, 35) zur Erzeugung einer ersten Messspannung und einer zweiten Messspannung,
• einen ersten (31) und einen zweiten (32) elektrischen Anschluss, die mit dem Generator (34, 35) verbunden sind und ausgestaltet sind, die erste oder die zweite Messspannung bei Kontakt des ersten elektrischen Anschlusses (31) mit einem ersten elektrischen Kontakt (21) einer der austauschbaren Einrichtungen (9; 17) und bei Kontakt des zweiten elektrischen Anschlusses (32) mit einem zweiten elektrischen Kontakt (22) der austauschbaren Einrichtung an die elektrischen Kontakte (21, 22) anzulegen, so dass beim Anlegen der ersten Messspannung an dem ersten elektrischen Kontakt (21) ein höheres elektrisches Potenzial anliegt als an dem zweiten elektrischen Kontakt (22), und beim Anlegen der zweiten Messspannung an dem ersten elektrischen Kontakt (21) ein niedrigeres elektrisches Potenzial anliegt als an dem zweiten elektrischen Kontakt (22),
• eine Messeinrichtung (6, 7), die ausgestaltet ist, in Reaktion auf die erste und zweite Messspannung jeweils ein Messsignal aufzunehmen,
• eine Auswertungseinrichtung (6), die ausgestaltet ist, die austauschbare Einrichtung (9) durch Auswertung des ersten und des zweiten Messsignals zu identifizieren.

5. Koordinatenmessgerät (11), die die Identifikationseinrichtung (10) nach dem vorhergehenden Anspruch aufweist.

6. Einrichtung (9; 17), insbesondere Messsensor, zur austauschbaren Anordnung an einem Koordinatenmessgerät (11), wobei die Einrichtung (9; 17) Folgendes aufweist:
• einen ersten (21) und einen zweiten (22) elektrischen Kontakt, über die die Einrichtung (9; 17) von außen elektrisch kontaktierbar ist,
• eine elektrische Schaltung (1, 2, 5, 25, 26) mit einem ersten Zweig (25) und einem parallel zu dem ersten Zweig (25) geschalteten zweiten Zweig (26), wobei der erste Zweig (25) und der zweite Zweig (26) jeweils an einem ersten Ende mit dem ersten elektrischen Kontakt (21) und an einem zweiten, dem ersten Ende entgegengesetzten Ende mit dem zweiten elektrischen Kontakt (22) verbunden sind, wobei der erste Zweig (25) einen für die Einrichtung (9; 17) charakteristischen elektrischen Widerstand (1) und der zweite Zweig (26) ein elektrisches Einwegventil (5), insbesondere eine Diode oder einen Transistor, und einen zweiten für die Einrichtung (9; 17) charakteristischen elektrischen Widerstand (2) aufweist.

7. Einrichtung nach dem vorhergehenden Anspruch, wobei die Diode (5) in dem zweiten Zweig (26) oder eine Reihenschaltung von Dioden (5, 5a, 5b) in dem zweiten Zweig (26) eine für die Einrichtung (9; 17) charakteristische Durchlassspannung aufweist.

8. System mit einer Mehrzahl der Einrichtungen (9; 17) zur austauschbaren Anordnung an einem Koordinatenmessgerät (11) nach einem der vorhergehenden Ansprüche, wobei jede der Einrichtungen (9; 17) eine innerhalb des Systems einzigartige Kombination eines Werts des ersten elektrischen Widerstandes (1) in dem ersten Zweig (25) mit einem Wert des zweiten elektrischen Widerstandes (2) und/oder einer Durchlassspannung des Einwegventils (5) in dem zweiten Zweig (26) aufweist.
